# EUROPÄISCHE PATENTANMELDUNG

(11) **EP 4 814 917 A1**
(43) Veröffentlichungstag der Anmeldung: **30.09.2026**
(21) Anmeldenummer: 26153265.9
(22) Anmeldetag: 21.01.2026
(51) Int. Cl.: G08G 1/005, B61L 15/00, G08G 1/123, G08G 1/133, H04W 4/42

(54) **ÜBERMITTLUNG VON HALTEANFORDERUNGEN FÜR FAHRZEUGE MITTELS MOBILER ENDGERÄTE**

(30) Priorität: 25.03.2025 DE 102025111555
(71) Anmelder: Siemens Mobility GmbH, 80997 München (DE)
(72) Erfinder: Irmisch, Andreas, 91058 Erlangen (DE); Lebioda, Heinrich, 47829 Krefeld (DE)
(74) Vertreter: Siemens Patent Attorneys

(57) **Zusammenfassung**

Die Erfindung betrifft ein Verfahren zur Übermittlung eines Anforderungssignals (AS) für einen Halt zwischen mobilen Endgeräten (ME, ME1, ME2) von Fahrgästen und Fahrzeugen (F) zur Personenbeförderung und Erzeugung eines Haltesignals (HS). Hierzu ermöglicht eine App auf dem mobilen Endgerät (ME, ME1, ME2) dem Fahrgast das Eingeben des Anforderungssignals (AS). Es wird mindestens ein erster drahtloser Kommunikationsweg zur Verfügung gestellt, über den das Anforderungssignal (AS) mittels eines innerhalb des Fahrzeugs liegenden ersten Sender-Empfängers (SEI) an eine fahrzeugseitige Steuerung (FS) übertragbar ist. Bei Vorliegen eines Anforderungssignals (AS) erfolgt eine Übermittlung des Anforderungssignals (AS) an die fahrzeugseitige Steuerung (FS). Auf das Anforderungssignal (AS) hin erzeugt die fahrzeugseitige Steuerung (FS) ein Haltesignal (HS) für das Fahrzeug (F). Es wird mindestens ein zweiter drahtloser Kommunikationsweg zur Verfügung gestellt, über den das Anforderungssignal (AS) mittels eines außerhalb des Fahrzeugs (F) liegenden zweiten Sender-Empfängers (SEA) an die fahrzeugseitige Steuerung (FS) übertragbar ist. Zur Übertragung des Anforderungssignals (AS) wird der erste und/oder der zweite drahtlose Kommunikationsweg genutzt.

Weiterhin betrifft die Erfindung ein Fahrzeug (F), ein Computerprogrammprodukt und ein computerlesbares Speichermedium.

## Beschreibung

### Technisches Gebiet

Von der Erfindung ist ein Verfahren zur Übermittlung eines Anforderungssignals für einen Halt von Fahrgästen an Fahrzeuge zur Personenbeförderung und Erzeugung eines Haltesignals umfasst. Ferner ist von der Erfindung ein Fahrzeug zur Personenbeförderung umfasst. Weiterhin ist ein Computerprogrammprodukt, enthaltend Programmbefehle von der Erfindung umfasst, sowie ein computerlesbares Speichermedium, enthaltend Daten.

### Technischer Hintergrund

Gemäß dem Stand der Technik ist es bekannt, dass in Fahrzeugen elektromechanische Taster installiert sein können, mittels derer ein Fahrgast seinen Haltewunsch für den kommenden Halt an den Fahrer übermitteln kann. Ein Haltesignal wird an den Fahrer des Fahrzeugs übermittelt, und im Fahrzeug an zentralen Anzeigen optisch und/oder akustisch angezeigt.

Hieraus ergibt sich das Problem, dass der Fahrgast sich im sich bewegenden Fahrzeug zu dem Taster hinbewegen muss, um seinen Haltewunsch zu übermitteln, was insbesondere für mobilitätseingeschränkte Fahrgäste schwierig sein kann. Außerdem muss der Fahrgast potenziell unhygienische Oberflächen berühren, um seinen Haltewunsch zu signalisieren. Die Übermittlung eines Haltewunsches ist lediglich für die folgende Haltestelle vorgesehen, nicht für weiter entfernte Haltestellen.

Eine Übermittlung eines Haltewunsches von außerhalb des Fahrzeuges, zum Beispiel von einer Haltestelle aus, ist in der Regel nicht möglich. Hierzu muss der Fahrgast anderweitig auf sich aufmerksam machen, indem er zum Beispiel nahe an den Fahrbahnrand tritt. Insbesondere bei schlechten Sichtverhältnissen kann es sein, dass der Fahrgast zu spät gesehen wird, was sowohl für das Fahrzeug als auch für den Fahrgast mit Gefahren verbunden ist.

Aus dem Dokument DE102013021495A1 ist ein Informationssystem bekannt, welches Informationen zwischen Fahrgästen und Fahrzeugen von öffentlichen Verkehrsmitteln ermöglicht. Hierzu ist in den Fahrzeugen jeweils eine Steuerungsbox mit Schnittstelle zum Bordcomputer installiert, die über eine bidirektionale, drahtlose Datenübertragungsverbindung mit einer beim Fahrgast befindlichen mobilen Anzeige- und Eingabevorrichtung verbindbar ist, zum Beispiel mit einem Smartphone. Der Fahrgast kann also seinen Haltewunsch zum Beispiel von einem eigenen Smartphone aus drahtlos an die Steuerungsbox übermitteln.

In DE102013021495A1 wird explizit eine direkte Kommunikation zwischen dem Smartphone und der Steuerungsbox beschrieben, explizit wird die drahtlose Kommunikation via Bluetooth beschrieben, und dass die Reichweite der Kommunikation auf maximal 200 m beschränkt ist, wobei diese auch deutlich geringer ausfallen kann, wenn es sich zum Beispiel um einen stark bebauten Bereich handelt, oder störende Wetterlagen, sowie andere potenzielle Störungen auftreten. Hieraus ergibt sich das Problem, dass ein Haltewunsch zwar von einem Smartphone aus an das Fahrzeug übermittelt werden kann, diese Übermittlung jedoch räumlich stark begrenzt und störungsanfällig ist. Daher kann der Fahrgast nur von innerhalb des Fahrzeuges seinen Haltewunsch angeben, oder von außerhalb zumindest erst dann, wenn er das Fahrzeug bereits sieht.

### Zusammenfassung der Erfindung

Die Aufgabe der Erfindung besteht darin, die beschriebenen Probleme im Stand der Technik zu beheben. Insbesondere ist es eine Aufgabe des erfindungsgemäßen Verfahrens, dass eine möglichst stabile Übermittlung eines Anforderungssignals für einen Halt zwischen einem mobilen Endgerät eines Fahrgastes, und einem Fahrzeug bereitgestellt wird. Es ist weiterhin eine Aufgabe der Erfindung, dass die Übermittlung des Anforderungssignals sowohl innerhalb des Fahrzeugs als auch außerhalb des Fahrzeugs, zum Beispiel von einer Haltestelle aus, möglichst stabil und nutzerfreundlich ermöglicht wird.

Weiterhin ist es Aufgabe der Erfindung, ein Fahrzeug, ein Computerprogrammprodukt und ein computerlesbares Speichermedium anzugeben, mit denen das verbesserte Verfahren durchführbar ist.

Gelöst wird die Aufgabe der Erfindung durch die Merkmale der unabhängigen Ansprüche. Vorteilhafte Ausgestaltungen der Erfindung sind in den abhängigen Ansprüchen beschrieben.

In einem ersten Aspekt betrifft die Erfindung ein Verfahren zur Übermittlung eines Anforderungssignals für einen Halt zwischen mobilen Endgeräten von Fahrgästen und Fahrzeugen zur Personenbeförderung und Erzeugung eines Haltesignals. Hierzu ermöglicht eine App auf dem mobilen Endgerät dem Fahrgast das Eingeben des Anforderungssignals. Es wird mindestens ein erster drahtloser Kommunikationsweg zur Verfügung gestellt, über den das Anforderungssignal mittels eines innerhalb des Fahrzeugs liegenden ersten Sender-Empfängers an eine fahrzeugseitige Steuerung übertragbar ist. Bei Vorliegen eines Anforderungssignals erfolgt eine Übermittlung des Anforderungssignals an die fahrzeugseitige Steuerung. Auf das Anforderungssignal hin erzeugt die fahrzeugseitige Steuerung ein Haltesignal für das Fahrzeug. Es wird mindestens ein zweiter drahtloser Kommunikationsweg zur Verfügung gestellt, über den das Anforderungssignal mittels eines außerhalb des Fahrzeugs liegenden zweiten Sender-Empfängers an die fahrzeugseitige Steuerung übertragbar ist. Zur Übertragung des Anforderungssignals wird der erste und/oder der zweite drahtlose Kommunikationsweg genutzt.

Die Erfindung beruht auf der Erkenntnis, dass die Übermittlung eines Anforderungssignals für den Halt eines Fahrzeugs vom Fahrgast an das Fahrzeug oftmals mit Hindernissen verbunden ist.

Es ist daher vorteilhaft, wenn der Fahrgast das Anforderungssignal von einem mobilen Endgerät aus besonders zuverlässig an das Fahrzeug übermitteln kann, ohne dass er sich dafür zu einem zentralen Taster im sich bewegenden Fahrzeug bewegen muss. Das kann insbesondere für mobilitätseingeschränkte Fahrgäste eine besondere Erleichterung darstellen.

Es ist außerdem vorteilhaft, dass mehrere Übertragungswege zur Verfügung gestellt werden, da so eine situationsangepasste, stabile Übermittlung des Anforderungssignals, oder auch eine nutzerdefinierte Übermittlung des Anforderungssignals erfolgen kann. Das zur Verfügung stellen mehrerer Übertragungswege kann außerdem eine Ausweichmöglichkeit bieten, sollte ein Übertragungsweg nicht nutzbar sein. Es reduziert also die Wahrscheinlichkeit von Verbindungsabbrüchen und verbessert die Stabilität der Verbindung und die Nutzererfahrung.

Insbesondere ist es vorteilhaft, dass mehrere Übertragungswege mit unterschiedlichen Reichweiten zur Verfügung gestellt werden, da so eine besonders hohe Flexibilität und Effizienz erreicht werden kann. Es wird vorteilhafterweise eine stabile Datenübertragung unabhängig von der Umgebung ermöglicht.

Weiterhin ist es vorteilhaft, dass die Notwendigkeit für die Installation und Instandhaltung der Taster, sowie der zugehörigen Verkabelung im Fahrzeug entfällt. Ohne die Taster kann der Innenraum des Fahrzeugs homogener gestaltet werden, und somit auch leichter sauber gehalten werden. Es ist jedoch vorteilhafterweise auch möglich, den bekannten Taster zur Übermittlung des Haltewunsches mit dem erfindungsgemäßen Verfahren gemeinsam zu betreiben, sodass beide Systeme parallel, insbesondere integriert, funktionieren.

Der Begriff *"Anforderungssignal"* bezeichnet bevorzugt eine vom Fahrgast in das mobile Endgerät eingegebene und vom mobilen Endgerät verarbeitete Informationseinheit, die in eine geeignete Form codiert wird, um bevorzugt drahtlos übertragen zu werden. Die Codierung erfolgt je nach Übertragungsweg zum Beispiel elektrisch, optisch, elektromagnetisch oder durch andere Modulationsverfahren. Mittels des Anforderungssignals kann der Fahrgast also vorzugsweise seinen Haltewunsch über ein mobiles Endgerät angeben und das Fahrzeug kann dieses Anforderungssignal empfangen und verarbeiten.

Der Begriff *"Mobiles Endgerät"* bezeichnet bevorzugt kompakte, mobile elektronische Endgeräte, die für den flexiblen Einsatz ohne permanente stationäre Stromversorgung konzipiert sind. Sie verfügen bevorzugt über integrierte Energiequellen, drahtlose Kommunikationsschnittstellen und Touch- und/oder Tastensteuerungen zur Interaktion. Beispiele hierfür sind Smartphones, Tablets, Smartwatches, Laptops, tragbare Mediaplayer. Es ist auch möglich, dass der Betreiber eines öffentlichen Nahverkehrssystems ein entsprechendes mobiles Endgerät für Fahrgäste zur Verfügung stellt.

Der Begriff *"Fahrzeug zur Personenbeförderung"* bezeichnet bevorzugt ein Transportmittel, das für den Transport von Menschen konzipiert ist. Es kann individuell oder im öffentlichen Verkehr genutzt werden und ist je nach Antrieb und Infrastruktur straßen-, schienen-, wasser-, oder luftgebunden. Beispiele sind Busse, Straßenbahnen, Züge, Taxis, Fähren, Passagierflugzeuge. Das Fahrzeug kann durch einen Fahrer, assistiert, automatisiert, oder autonom betrieben werden.

Der Begriff *"Erzeugung eines Haltesignals"* bezeichnet bevorzugt jede Form von Signalen, z.B. elektrisch, visuell, haptisch, akustisch. Insbesondere kann es im Sinne der Erfindungsbeschreibung vorgesehen sein, dass ein Haltesignal von der fahrzeugseitigen Steuerung zu Informationszwecken an eine Anzeigevorrichtung im Fahrzeug übermittelt wird, wobei es dem Fahrer zum Beispiel an einer Anzeigevorrichtung im Fahrerbereich und/oder den Fahrgästen zum Beispiel an zentralen Anzeigevorrichtungen im Fahrgastraum angezeigt werden kann. Weiterhin kann es vorgesehen sein, dass ein Haltesignal dem Fahrgast auf einem mobilen Endgerät angezeigt wird. Hierzu wird bevorzugt nach erfolgreicher Übermittlung des Anforderungssignals eine Bestätigung des Haltesignals durch die fahrzeugseitige Steuerung auf das mobile Endgerät des Fahrgastes zurückgesendet. Außerdem kann es vorgesehen sein, dass das Haltesignal in Form eines elektrischen Signals von der fahrzeugseitigen Steuerung über eine Schnittstelle einem Verfahren zum automatisierten Fahren zur Verfügung gestellt wird.

Der Begriff *"App"* (kurz für Applikation) bezeichnet bevorzugt eine Softwareanwendung, die auf mobilen Endgeräten oder anderen digitalen Geräten installiert werden kann, um spezifische Funktionen bereitzustellen. Sie ermöglicht Nutzern die Interaktion mit verschiedenen Diensten. Erfindungsgemäß kann die Funktion der Eingabe eines Anforderungssignals für einen Halt durch eine App realisiert werden. Hierbei kann es sich entweder um eine einzelne App handeln, oder die Funktion kann in andere Apps eingebunden werden, wie zum Beispiel in eine Ticket-App oder eine Reiseauskunfts-App.

Der Begriff *"Drahtloser Kommunikationsweg"* bezeichnet bevorzugt eine Übertragungsmethode, bei der ein Signal ohne durchgehende physische Leitungen über ein geeignetes Medium übertragen wird. Dies geschieht zum Beispiel über elektromagnetische, optische, akustische, oder andere Wellenformen. Einzelne Abschnitte des Kommunikationswegs können dennoch kabelgebunden sein, etwa innerhalb von Geräten zur Signalverarbeitung, Verstärkung oder Weiterleitung, zum Beispiel an die fahrzeugseitige Steuerung.

Der Begriff *"Sender-Empfänger"* bezeichnet bevorzugt ein Gerät, das sowohl das Senden als auch das Empfangen von Signalen ermöglicht und zur bidirektionalen Kommunikation in drahtlosen oder kabelgebundenen Netzwerken dient. Ein Sender-Empfänger kann Signale zum Beispiel verstärken, umwandeln oder weiterleiten und kann in verschiedenen Anwendungen eingesetzt werden, etwa in Netzwerkkomponenten mit Sende- und Empfangsfunktion. Der Sender-Empfänger kann durch ein Gerät oder mehrere Geräte verwirklicht sein.

Der Begriff *"fahrzeugseitige Steuerung"* bezeichnet bevorzugt ein System oder ein Gerät, das Signale über verschiedene Übermittlungsverfahren, z.B. kabelgebundene Schnittstellen, bevorzugt jedoch über drahtlose Schnittstellen wie Bluetooth, Mobilfunk, WLAN, usw. empfangen, verarbeiten und entsprechende Aktionen auslösen kann. Sie kann ein empfangenes Anforderungssignal in ein Haltesignal umwandeln und zum Beispiel zur Anzeige bringen, eine Bestätigung zurücksenden, oder es an ein nachgelagertes System weiterleiten, das die technische Umsetzung übernimmt. Zum Beispiel könnte die Weitergabe an ein Verfahren zum autonomen Fahren erfolgen, welches das Stoppen des Fahrzeugs umsetzen kann. Die fahrzeugseitige Steuerung verfügt bevorzugt über geeignete Schnittstellen zur Kommunikation mit anderen Systemen, um Signale empfangen und gezielt weitergeben zu können.

**In** einer weiteren bevorzugten Ausführungsform ist der erste Sender-Empfänger dazu eingerichtet, das Anforderungssignal mittels lokaler drahtloser Kommunikation, bevorzugt als Bluetooth-Signal, oder als WLAN-Signal zu empfangen.

Es ist vorteilhaft, dass innerhalb des Fahrzeugs mittels eines Sender-Empfängers ein stabiles lokales Netz installiert ist, da so eine zuverlässige Übermittlung des Anforderungssignals über kurze Strecken, zum Beispiel innerhalb des Fahrzeugs ermöglicht wird. Vorteilhafterweise ist die Stabilität der Verbindung dadurch unabhängig von externen Netzabdeckungen und Verzögerungen oder Signalverluste zum Beispiel durch schwache Netzabdeckung eines externen Netzes, insbesondere bei hohen Geschwindigkeiten des Fahrzeugs, können reduziert werden.

Durch Verwendung von lokaler drahtloser Kommunikation über zum Beispiel Bluetooth oder WLAN, können in Fällen, für die eine lokale drahtlose Kommunikation ausreichend ist, vorteilhafterweise höhere Kosten vermieden werden, wie sie zum Beispiel bei der Verwendung von Mobilfunk auftreten.

Eine lokale drahtlose Kommunikation mithilfe eines im Fahrzeug befindlichen Sender-Empfängers, erlaubt außerdem eine Übermittlung des Signals auch in Regionen mit wenig ausgebautem Mobilfunknetz.

Der Begriff *"lokale drahtlose Kommunikation"* bezeichnet bevorzugt die kabellose Übertragung von Daten über kurze bis mittlere Distanzen innerhalb eines begrenzten Bereichs, beispielsweise zwischen Geräten in unmittelbarer Nähe oder innerhalb eines lokalen Netzwerks. Bevorzugt wird eine lokale drahtlose Kommunikation durch das Fahrzeug zur Verfügung gestellt, d.h. es wird mindestens ein Sender-Empfänger innerhalb des Fahrzeugs zur Verfügung gestellt und es ist insbesondere kein Sender-Empfänger außerhalb des Fahrzeugs an der Bereitstellung der lokalen drahtlosen Kommunikation beteiligt. Die Übertragung von Daten kann über verschiedene Übertragungsmedien erfolgen, darunter elektromagnetische Wellen (z.B. Funktechnologien), optische Signale oder akustische Wellen. Beispiele sind Bluetooth, WLAN, NFC, Zigbee, Ultraschallkommunikation.

Besonders bevorzugt ist die Verwendung von Bluetooth oder WLAN, weil es sich dabei um verbreitete Standards handelt, welche durch die meisten weit verbreiteten mobilen Endgeräte umgesetzt werden können. Hierdurch kann das Verfahren gut in bestehende Infrastruktur eingebunden werden.

In einer weiteren bevorzugten Ausführungsform umfasst der zweite Sender-Empfänger mindestens eine feststehende Antenne, bevorzugt ein Netzwerk von feststehenden Antennen außerhalb des Fahrzeugs.

Es ist vorteilhaft, dass auch eine Kommunikation mittels feststehender Sender-Empfänger außerhalb des Fahrzeugs zur Verfügung gestellt wird, insbesondere in dem Fall, wo das Anforderungssignal von außerhalb des Fahrzeugs, zum Beispiel von einer Haltestelle aus, an das Fahrzeug übermittelt werden soll. Hierdurch wird es in solchen Fällen ermöglicht, dass das Anforderungssignal bereits aus größerer Entfernung an das Fahrzeug übermittelt werden kann.

Ein redundantes Anbieten verschiedener drahtloser Kommunikationswege, um ein Anforderungssignal für einen Halt an das Fahrzeug zu übermitteln (mindestens ein erster drahtloser Kommunikationsweg und mindestens zweiter drahtloser Kommunikationsweg), erhöht außerdem die Ausfallsicherheit, da ggf. auf alternative Übertragungswege ausgewichen werden kann. So spricht zum Beispiel technisch nichts dagegen, den zweiten drahtlosen Kommunikationsweg auch bei einer Übermittlung des Anforderungssignals von innerhalb des Fahrzeugs aus zu verwenden, zum Beispiel dann, wenn der erste drahtlose Kommunikationsweg in dem Moment technische Probleme aufweist.

Das zur Verfügung stellen mehrerer verschiedener drahtloser Kommunikationswege ermöglicht außerdem dem Fahrgast durch die Einstellungen an seinem mobilen Endgerät einen Einfluss darauf zu nehmen, welche Übertragungswege er nutzen oder zulassen möchte.

Der Begriff *"feststehende Antenne"* bezeichnet bevorzugt einen stationär installierten Sender-Empfänger, der Signale über drahtlose Übertragungsverfahren empfangen, verstärken und/oder weiterleiten kann. Sie kann als Schnittstelle zwischen drahtlosen Kommunikationssystemen dienen und kann Signale über elektromagnetische Wellen, zum Beispiel über Funkwellen insbesondere Mobilfunkfrequenzen senden und/oder empfangen.

Ein *"Netzwerk von feststehenden Antennen"* besteht bevorzugt aus mehreren räumlich verteilten Antennen, die koordiniert zusammenarbeiten, um eine großflächige und stabile Signalübertragung zu ermöglichen. Diese Antennen können Signale untereinander weiterleiten und so die Abdeckung vergrößern.

Für die Signalübertragung können sowohl bestehende Infrastrukturen wie Mobilfunknetze genutzt werden als auch gesonderte, lokal installierte Antennennetzwerke eingerichtet werden. Die Nutzung bestehender Netze bietet zum Beispiel den Vorteil einer breiten Abdeckung und standardisierter Protokolle, während ein eigenes Antennennetz eine gezielte Optimierung der Signalqualität, Netzwerkkapazität und Sicherheit ermöglichen kann.

In einer weiteren bevorzugten Ausführungsform umfasst der zweite drahtlose Kommunikationsweg den zweiten Sender-Empfänger und eine Leitzentrale.

Der Begriff *"Leitzentrale"* bezeichnet bevorzugt eine zentrale Einrichtung zur Überwachung, Steuerung und/oder Koordination betrieblicher Abläufe im Verkehrsmanagement. Sie erfasst und verarbeitet Daten aus verschiedenen Quellen, wie Fahrzeugortung, Sensoren, Kameras, Fahrplänen, um bevorzugt den Verkehr effizient zu steuern, Fahrgastinformationen bereitzustellen, Betriebsabläufe zu optimieren, usw. Zum Beispiel auch bei veränderten Bedingungen, wie Störungen oder hohem Verkehrsaufkommen. Gemäß der Ausführungsform ist es vorgesehen, dass die Leitzentrale auch die von mobilen Endgeräten von Fahrgästen auf dem zweiten drahtlosen Kommunikationsweg übermittelten Anforderungssignale empfängt, verarbeitet und bevorzugt entsprechend an die fahrzeugseitige Steuerung übermittelt.

Es ist vorteilhaft, wenn eine Leitzentrale in die Übermittlung von Anforderungssignalen an die fahrzeugseitige Steuerung eingebunden ist, da hierdurch z.B. die aktuelle Verkehrssituation oder die aktuelle Situation an der Haltestelle berücksichtigt werden kann.

In einer weiteren bevorzugten Ausführungsform wird für die Übermittlung des Anforderungssignals von innerhalb des Fahrzeugs der erste und/oder der zweite drahtlose Kommunikationsweg zur Verfügung gestellt.

In einer weiteren bevorzugten Ausführungsform wird für die Übermittlung des Anforderungssignals von außerhalb des Fahrzeugs der zweite drahtlose Kommunikationsweg zur Verfügung gestellt.

Die Vorteile dieser Ausführungsformen sind vorstehend in Bezug auf die verschiedenen Kommunikationswege bereits erläutert worden.

In einer weiteren bevorzugten Ausführungsform wird das Haltesignal visuell, haptisch, und/oder akustisch anzeigt, wobei das Haltesignal dem Fahrgast auf dem mobilen Endgerät angezeigt wird.

Aus dem Stand der Technik sind bekannte Anzeigeoptionen solche, bei denen dem Fahrer, und/oder den Fahrgästen optisch und/oder akustisch angezeigt wird, dass ein Haltesignal für die nächste Station besteht. Hierzu werden Anzeigen im Fahrerraum oder im Fahrgastraum verwendet. Auch ein akustisches Signal wird häufig eingesetzt, um das Bestehen eines Haltesignals für die nächste Haltestelle zu signalisieren.

Neben diesen gut bekannten Anzeigen für ein Haltesignal ist es gemäß der Ausführungsform ebenfalls vorgesehen, dass ein Haltesignal direkt auf dem mobilen Endgerät des Fahrgastes angezeigt wird. Hierzu stehen eine visuelle Anzeige, eine akustische Anzeige, und/oder eine haptische Anzeige des mobilen Endgeräts zur Verfügung, etwa über die Nutzung einer Vibrationsfunktion des mobilen Endgeräts. Die Anzeigeoptionen können einzeln genutzt werden, oder miteinander kombiniert werden. Besonders vorteilhaft ist es, dass der Fahrgast, wenn er das Anforderungssignal zum Beispiel beim Einsteigen in das Fahrzeug bereits für eine weiter entfernte Haltestelle übermittelt hat, kurz vor dem tatsächlichen Halt des Fahrzeugs eine entsprechende Anzeige über sein mobiles Endgerät erhalten kann. Dies reduziert zum Beispiel die Wahrscheinlichkeit, dass der Fahrgast seinen gewünschten Ausstieg verpasst. Fahrgäste mit eingeschränkten Sinnesfunktionen haben durch die Anzeige des Haltesignals auf ihrem eigenen mobilen Endgerät vorteilafterweise die Möglichkeit, die Anzeige an ihre Bedürfnisse anzupassen. Der Fahrgast hat bevorzugt die Möglichkeit, sich das Haltesignal zu seinem eigenen Anforderungssignal in einer gewünschten Weise durch sein mobiles Endgerät anzeigen zu lassen.

Es ist außerdem denkbar, dass mehrere vorhandene Haltesignale (z.B. von Anforderungssignalen, die von verschiedenen Fahrgästen übermittelt wurden) auf Anzeigen angezeigt werden, die zum Beispiel Karten mehrerer oder aller noch folgenden Haltestellen umfassen. Eine solche Funktion ist sowohl an zentralen Anzeigen im Fahrzeug als auch auf dem mobilen Endgerät des Nutzers umsetzbar.

In einer weiteren bevorzugten Ausführungsform wird das Haltesignal von der fahrzeugseitigen Steuerung über eine Schnittstelle einem Verfahren zum automatisierten Fahren zur Verfügung gestellt.

Der Begriff *"Schnittstelle"* bezeichnet bevorzugt einen Übergangsbereich, der den Austausch von Signalen, zum Beispiel von elektrischen, optischen oder drahtlosen Signalen zwischen verschiedenen Systemkomponenten ermöglicht. Sie umfasst sowohl physikalische Verbindungselemente wie Kabelverbindungen oder Funkmodule, als auch zum Beispiel zugehörige Softwareprotokolle, die zum Beispiel eine Übertragung, Umwandlung und/oder Verarbeitung der Signale ermöglichen. Dabei kann die Schnittstelle z.B. regeln, sodass Signale vom Erzeuger über Weiterleitungseinheiten an Empfänger oder Verarbeitungsinstanzen kompatibel übermittelt werden können.

Es kann zum Beispiel ein über drahtlose Kommunikation empfangenes Signal durch eine Schnittstelle in ein digitales Format überführt und an ein Steuerungssystem weitergeleitet werden, wo es softwaregestützt verarbeitet wird.

Der Begriff *"Verfahren zum automatisierten Fahren"* bezeichnet bevorzugt technische, sowie algorithmische Methoden, die es einem Fahrzeug ermöglichen, bestimmte Fahraufgaben teilweise oder vollständig ohne menschliches Eingreifen auszuführen. Dazu gehören die Erfassung von Umgebungsdaten durch Sensoren wie z.B. Kameras, Lidar, Radar, GPS, sowie deren Verarbeitung und Interpretation, und schließlich die Steuerung von Fahrzeugfunktionen wie z.B. Antrieb, Lenkung, Bremse, etc. durch entsprechende Algorithmen. Solche Verfahren können unterschiedliche Automatisierungsstufen ermöglichen, von Fahrassistenzsystemen bis hin zum vollständig autonomen Fahren.

Es ist vorteilhaft, wenn das Haltesignal über eine geeignete Schnittstelle von der fahrzeugseitigen Steuerung an ein Verfahren zum automatisierten Fahren weitergeleitet werden kann. Dies ermöglicht den Einsatz des Verfahrens gemäß der Ausführungsform in sämtlichen Automatisierungsstufen des Fahrens. Im Fall des autonomen Fahrens ist das Fahrzeug in der Lage, das Anforderungssignal des Fahrgastes selbstständig in das Verfahren zum automatisierten Fahren zu integrieren und den tatsächlichen Halt des Fahrzeugs autonom umzusetzen. Auch auf geringeren Automatisierungsstufen kann das Anforderungssignal des Fahrgastes auf eine Weise in ein Verfahren zum automatisierten Fahren integriert werden, die weitere Bedingungen, wie zum Beispiel die Verkehrssituation, oder die Situation an der Haltestelle mitberücksichtigt und dadurch das Einleiten des entsprechenden Halts durch den Fahrer unterstützt.

In einer weiteren bevorzugten Ausführungsform ermittelt das mobile Endgerät seinen Standort und stellt diesen für die Verwendung durch die App zur Verfügung.

Es ist vorteilhaft, wenn das mobile Endgerät seinen Standort ermittelt und diesen für die Verwendung durch die App zur Verfügung stellt, denn es kann zum Beispiel durch die App vorgesehen sein, dass das mobile Endgerät sich in einer gewissen geographischen Nähe zu Haltestelle und/oder dem Fahrzeug befindet, um ein Anforderungssignal an ein Fahrzeug senden zu können. Dies kann dazu verwendet werden, einem Missbrauch der Funktion vorzubeugen. Es kann außerdem hilfreich sein, wenn das mobile Endgerät seinen Standort bestimmt und der App zur Verfügung stellt, da hierdurch durch die App eine Vorauswahl von Haltestellen und/oder Fahrzeugen getroffen werden kann, die aufgrund der geographischen Position des mobilen Endgeräts für den Nutzer von Interesse sein können.

Ein mobiles Endgerät kann bevorzugt mittels verschiedener Ortungsverfahren seinen *"Standort ermitteln".* Eine besonders häufige Methode ist GNSS (Global Navigation Satellite System), zu dem zum Beispiel GPS gehört. Dabei empfängt das Gerät Signale von mehreren Satelliten und berechnet seinen Standort anhand der Laufzeit der Signale. Zusätzlich können Mobilfunkzellen-Triangulation, WLAN-Signale oder Bluetooth-Beacons genutzt werden, um die Position zu bestimmen, insbesondere in städtischen Gebieten mit schwachem GNSS-Signal.

Wenn die Ortung nicht genau genug ist, zum Beispiel in stark bebauten Gebieten mit hohen Gebäuden, in Tunneln oder in Wäldern, können ergänzende Sensoren bei der Positionsermittlung genutzt werden. Dazu gehören zum Beispiel Beschleunigungssensoren, Gyroskope und Magnetometer, die zum Beispiel die Bewegungsrichtung und Geschwindigkeit messen und eine Positionseinschätzung ermöglichen, selbst wenn keine oder unzureichende direkte Ortungssignale verfügbar sind. Eine Kombination dieser Methoden kann in solchen Situationen die Genauigkeit verbessern. Besonders vorteilhaft ist dies zum Beispiel für die Verwendung in Tunneln, oder dicht bebauten Stadtgebieten. Dies kann zum Beispiel im öffentlichen Personenverkehr besonders vorteilhaft sein, da so auch eine Verwendung der Positionsbestimmung in Bezug auf zum Beispiel U-Bahnen möglich wird, was andernfalls nur schwer möglich wäre.

In einer weiteren bevorzugten Ausführungsform ermöglicht die App für die Erzeugung des Anforderungssignals die Auswahl einer Haltestelle aus mehreren noch anzufahrenden Haltestellen.

Das bedeutet bevorzugt, dass in der App nicht nur die Möglichkeit vorgesehen ist, ein Anforderungssignal für einen Halt an der nächstfolgenden Haltestelle zu erfassen, sondern auch ein Anforderungssignal für eine beliebige der weiteren noch anzufahrenden Haltestellen erfasst werden kann. Dies ermöglicht es dem Fahrgast vorteilhafterweise zum Beispiel direkt nach dem Einsteigen in das Fahrzeug das Anforderungssignal für den Halt zu erfassen, an dem er aussteigen möchte. Es ist dann nicht notwendig, dass der Fahrgast das Anforderungssignal innerhalb eines bestimmten, meistens recht kurzen, Zeitfensters erfasst.

In einer weiteren bevorzugten Ausführungsform ist in der App mindestens ein Kriterium hinterlegt, welches die Auswahl des Fahrzeugs, für das die Übermittlung des Anforderungssignals zugelassen wird, festlegt. Das mindestens eine Kriterium wird bevorzugt ausgewählt aus einer Gruppe umfassend: Vorhandensein eines passenden Tickets, Nähe zu einer der Haltestellen, Freischaltung des Fahrgastes für die Funktionalität seitens eines Betreibers.

Das bedeutet bevorzugt, dass in der App Kriterien hinterlegt sind, welche festlegen, an welche Fahrzeuge das mobile Endgerät/die App das Anforderungssignal senden darf, was vorteilhafterweise dazu dient, einen Missbrauch der Funktion zu verhindern.

Diese Kriterien können zum Beispiel voraussetzen, dass der Fahrgast ein Ticket besitzt, welches für das jeweilige Fahrzeug gültig ist und welches in der App hinterlegt oder anderweitig belegt ist. Ein zu berücksichtigendes Kriterium könnte sein, dass die App eine vorherige Freigabe der Funktion des Versendens von Anforderungssignalen erfordert. Die Aktivierung der Funktion kann dabei über eine beispielsweise serverseitige Autorisierung erfolgen, bei der die Funktionalität durch den Betreiber freigeschaltet wird. Die Autorisierung des mobilen Endgeräts für das Versenden von Anforderungssignalen, auf dem die App installiert ist, kann dabei unterschiedlich ausgestaltet sein (zum Beispiel zeitlich begrenzt, auf ein oder mehrere bestimmte Fahrzeuge, oder eine oder mehrere bestimmte Linien begrenzt, auf eine oder mehrere bestimmte Haltestellen begrenzt, unbegrenzt, usw.). Es kann auch umsetzbar sein, dass diese Freischaltung durch den Betreiber beispielsweise serverseitig widerrufen werden kann. Es könnte auch die Nähe des mobilen Endgeräts zu der Haltestelle, für die ein Anforderungssignal übermittelt werden soll, als Kriterium berücksichtigt werden, sodass ein mobiles Endgerät zum Beispiel nur innerhalb einer gewissen Distanz zur relevanten Haltestelle und/oder zum relevanten Fahrzeug die Berechtigung hat, ein Anforderungssignal für diese zu übermitteln. Hierdurch könnte verhindert werden, dass aus weiter Distanz "wahllos" Fahrzeuge an verschiedenen Haltestellen zum Halt gebracht werden. Es ist auch denkbar, dass in der App als Kriterium eine zulässige Höchstzahl von Anforderungssignalen innerhalb eines gewissen Zeitfensters definiert wird, um zu verhindern, dass ein mobiles Endgerät genutzt wird, um viele verschiedene Fahrzeuge zum Halt zu bringen. Eine Kombination mehrerer Kriterien kann ebenfalls umgesetzt werden.

Die Vorteile des Verfahrens gelten gleichermaßen auch für das Fahrzeug, das Computerprogrammprodukt und das computerlesbare Speichermedium.

In einem weiteren Aspekt betrifft die Erfindung ein Fahrzeug zur Personenbeförderung, wobei das Fahrzeug einen Empfänger und eine mit diesem signaltechnisch kommunizierende fahrzeugseitige Steuerung umfasst, welche dazu eingerichtet sind, ein erfindungsgemäßes Verfahren durchzuführen.

In einem weiteren Aspekt betrifft die Erfindung ein Computerprogrammprodukt, enthaltend Programmbefehle, die durch fahrzeugseitige Steuerungen und/oder Leitzentralen und/oder mobile Endgeräte von Fahrgästen ausführbar sind, derart, dass ein erfindungsgemäßes Verfahren ausgeführt wird.

Gemäß der Erfindung wird somit ein Programmmodule enthaltendes Computerprogrammprodukt mit Programmbefehlen beschrieben, wobei die Programmmodule auf demselben oder mehreren Prozessoren laufen können. Mittels des Computerprogrammproduktes, das ein Computerprogramm oder mehrere Computerprogramme umfassen kann, sind jeweils das erfindungsgemäße Verfahren und/oder dessen Ausführungsbeispiele ausführbar und mit der Ausführung werden die vorstehend beschriebenen Vorteile erreicht.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

In einem weiteren Aspekt betrifft die Erfindung ein computerlesbares Speichermedium, enthaltend Daten, welche als Datensätze vom Speichermedium gespeichert werden, derart, dass die Datensätze das Computerprogrammprodukt ausführbar machen.

Darüber hinaus wird somit eine Bereitstellungsvorrichtung zum Speichern und/oder Bereitstellen des Computerprogramms in Form eines computerlesbaren Speichermediums beschrieben. Die Bereitstellungsvorrichtung ist beispielsweise eine Speichereinheit, die das Computerprogramm speichert und zum Abruf bereitstellt. Alternativ oder zusätzlich ist die Bereitstellungsvorrichtung ein Netzwerkdienst, ein Computersystem, ein Serversystem, insbesondere ein verteiltes, beispielsweise cloudbasiertes Computersystem oder virtuelles Rechnersystem, welches das Computerprogramm auf einem computerlesbaren Speichermedium speichert und vorzugsweise in Form eines Datenstroms bereitstellt.

Die Bereitstellung erfolgt in Form von Programmmodule beschreibenden Programmdatensätzen als Datei, insbesondere als Downloaddatei, oder als Datenstrom, insbesondere als Downloaddatenstrom, des Computerprogramms. Das Computerprogramm wird beispielsweise unter Verwendung der Bereitstellungsvorrichtung in eine Rechenumgebung übertragen, sodass das erfindungsgemäße Verfahren in einer Recheninstanz oder mehreren Recheninstanzen dieser Rechenumgebung zur Ausführung gebracht werden kann.

Speichereinrichtungen können als computerlesbarer Speicher in Form eines Arbeitsspeichers (engl. Random-Access Memory, RAM) oder Datenspeichers (Festplatte oder Datenträger) ausgeführt sein.

### Exemplarische Ausführungsbeispiele der Zeichnungen

Weitere Einzelheiten der Erfindung werden nachfolgend anhand der Zeichnungen beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden Erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar.

Kurzbeschreibung der Figuren:
**Fig. 1** illustriert eine exemplarische Ausführungsform des erfindungsgemäßen Verfahrens, bei dem der erste drahtlose Kommunikationsweg zur Übermittlung des Anforderungssignals genutzt wird.
**Fig. 2** illustriert eine exemplarische Ausführungsform des erfindungsgemäßen Verfahrens, bei dem der zweite drahtlose Kommunikationsweg zur Übermittlung des Anforderungssignals genutzt wird.

Ausführliche Beschreibung der Figuren:

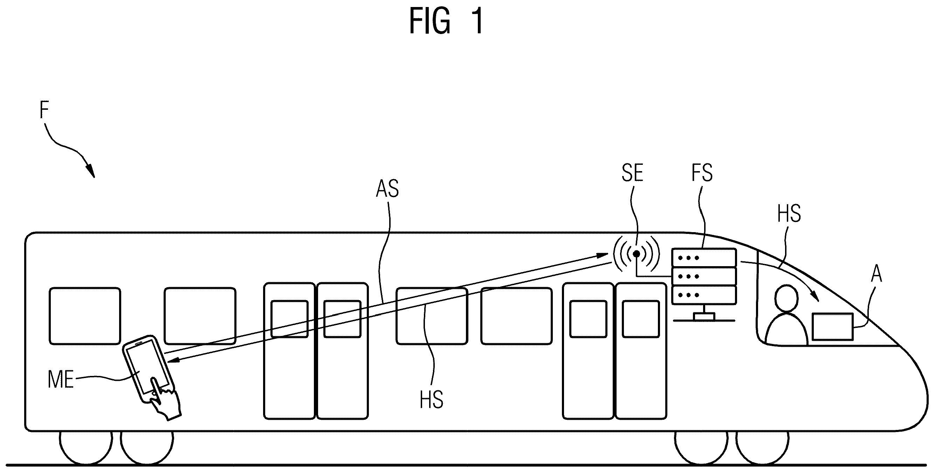

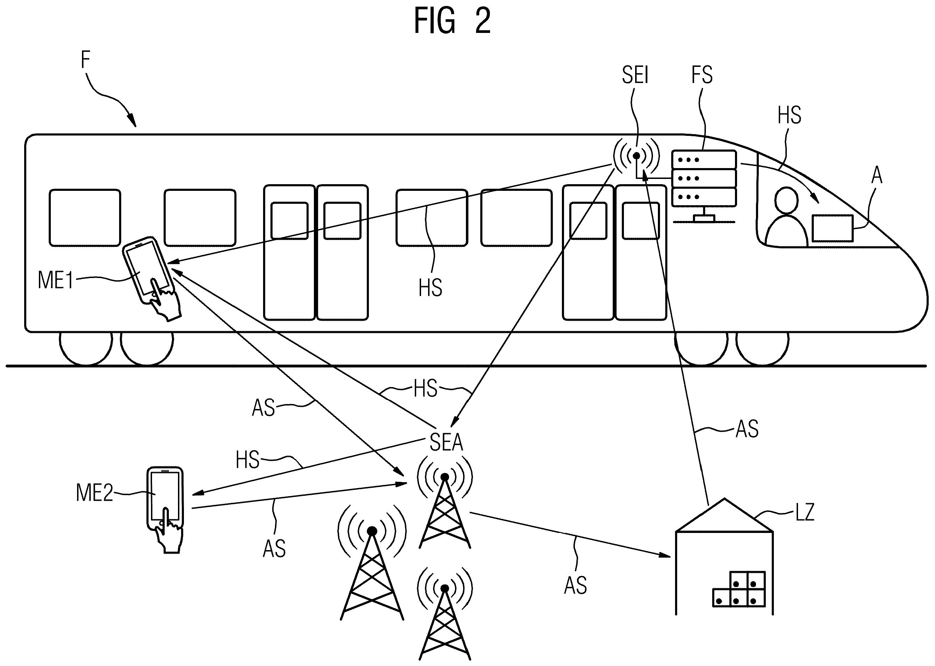

**Fig. 1** illustriert eine exemplarische Ausführungsform des erfindungsgemäßen Verfahrens, bei dem sich ein Fahrgast mit einem mobilen Endgerät **ME** innerhalb eines Fahrzeuges **F** befindet und ein Anforderungssignal **AS** über einen ersten drahtlosen Kommunikationsweg übermittelt wird. Der Fahrgast sendet mittels seines mobilen Endgerätes **ME** das Anforderungssignal **AS** an einen Sender-Empfänger **SE** innerhalb des Fahrzeugs **F,** welches das Anforderungssignal **AS** an eine fahrzeugseitige Steuerung **FS** übermittelt. Exemplarisch ist hier nur ein einziger Sender-Empfänger im Fahrzeug **F** eingezeichnet, es können jedoch auch mehrere Sender-Empfänger **SE** im Fahrzeug **F** verteilt vorliegen. Die fahrzeugseitige Steuerung **FS** übermittelt daraufhin ein Haltesignal **HS** an eine Anzeige **A** im Fahrzeug **F.** Die Anzeige **A** ist hier exemplarisch nur im Fahrzeugführerbereich eingezeichnet, es kann jedoch an verschiedenen Stellen im Fahrzeug **F** eine oder mehrere Anzeigen **A** für das Haltesignal **HS** geben. Die fahrzeugseitige Steuerung **FS** kann das Haltesignals **HS** alternativ auch an ein Verfahren zum automatisierten Fahren weitergeben (hier nicht eingezeichnet). Gemäß der Ausführungsform ist es auch vorgesehen, dass die fahrzeugseitige Steuerung **FS** das Haltesignal **HS** über einen Sender-Empfänger **SE** an das mobile Endgerät **ME** des Fahrgastes übermittelt. **Fig. 2** illustriert eine exemplarische Ausführungsform des erfindungsgemäßen Verfahrens, bei dem sich ein Fahrgast mit einem mobilen Endgerät **ME1, ME2** sowohl innerhalb (im Fall **ME1**) als auch außerhalb (in Fall **ME2**) des Fahrzeugs **F** befinden kann und das Anforderungssignal **AS** über einen zweiten Kommunikationsweg übermittelt wird. In dieser Ausführungsform wird das Anforderungssignal **AS** vom mobilen Endgerät **ME1, ME2** zuerst an einen Sender-Empfänger **SEA** außerhalb des Fahrzeugs **F** übermittelt. Von dem Sender-Empfänger **SEA** außerhalb des Fahrzeugs **F** wird das Anforderungssignal **AS** an eine Leitzentrale **LZ** weitergeleitet. Die Leitzentrale **LZ** übermittelt das Anforderungssignal **AS** an den Sender-Empfänger **SEI** innerhalb des Fahrzeugs **F,** der es an die fahrzeugseitige Steuerung **FS** weitergibt. Die fahrzeugseitige Steuerung übermittelt das Haltesignal **HS** an die Anzeige **A** im Fahrzeug **F.** Die Anzeige **A** ist hier exemplarisch nur im Fahrzeugführerbereich eingezeichnet, es kann jedoch an verschiedenen Stellen im Fahrzeug **F** eine oder mehrere Anzeigen **A** für das Haltesignal **HS** geben. Die fahrzeugseitige Steuerung **FS** kann das Haltesignals **HS** alternativ auch an ein Verfahren zum automatisierten Fahren weitergeben (hier nicht eingezeichnet). Gemäß der Ausführungsform ist es auch vorgesehen, dass die fahrzeugseitige Steuerung **FS** das Haltesignal **HS** über einen Sender-Empfänger **SE** innerhalb und/oder außerhalb des Fahrzeugs **F** an das mobile Endgerät **ME1, ME2** des Fahrgastes übermittelt.

### Bezugszeichenliste

- **F**: Fahrzeug
- **ME, ME1, ME2**: mobiles Endgerät
- **AS**: Anforderungssignal
- **HS**: Haltesignal
- **SE, SEI, SEA**: Sender-Empfänger
- **FS**: fahrzeugseitige Steuerung
- **A**: Anzeige
- **LZ**: Leitzentrale

## Patentansprüche

1. Verfahren zur Übermittlung eines Anforderungssignals (AS) für einen Halt zwischen mobilen Endgeräten (ME, ME1, ME2) von Fahrgästen und Fahrzeugen (F) zur Personenbeförderung und Erzeugung eines Haltesignals (HS), wobei
- eine App auf dem mobilen Endgerät (ME, ME1, ME2) dem Fahrgast das Eingeben des Anforderungssignals (AS) ermöglicht,
- mindestens ein erster drahtloser Kommunikationsweg zur Verfügung gestellt wird, über den das Anforderungssignal (AS) mittels eines innerhalb des Fahrzeugs (F) liegenden ersten Sender-Empfängers (SEI) an eine fahrzeugseitige Steuerung (FS) übertragbar ist,
- bei Vorliegen eine Übermittlung des Anforderungssignals (AS) an die fahrzeugseitige Steuerung (FS) erfolgt,
- auf das Anforderungssignal (AS) hin die fahrzeugseitige Steuerung (FS) ein Haltesignal (HS) für das Fahrzeug (F) erzeugt,
**dadurch charakterisiert, dass**
mindestens ein zweiter drahtloser Kommunikationsweg zur Verfügung gestellt wird, über den das Anforderungssignal (AS) mittels eines außerhalb des Fahrzeugs liegenden zweiten Sender-Empfängers (SEA) an die fahrzeugseitige Steuerung (FS) übertragbar ist,
wobei zur Übertragung des Anforderungssignals (AS) der erste und/oder der zweite drahtlose Kommunikationsweg genutzt wird.

2. Verfahren gemäß dem vorherigen Anspruch
**dadurch charakterisiert, dass**
der erste Sender-Empfänger (SEI) dazu eingerichtet ist, das Anforderungssignal (AS) mittels lokaler drahtloser Kommunikation, bevorzugt als Bluetooth-Signal, oder als WLAN-Signal zu empfangen.

3. Verfahren gemäß einem der vorherigen Ansprüche
**dadurch charakterisiert, dass**
der zweite Sender-Empfänger (SEA) mindestens eine feststehende Antenne, bevorzugt ein Netzwerk von feststehenden Antennen außerhalb des Fahrzeugs (F) umfasst.

4. Verfahren gemäß einem der vorherigen Ansprüche
**dadurch gekennzeichnet, dass**
der zweite drahtlose Kommunikationsweg den zweiten Sender-Empfänger (SEA) und eine Leitzentrale (LZ) umfasst.

5. Verfahren gemäß einem der vorherigen Ansprüche
**dadurch gekennzeichnet, dass**
für die Übermittlung des Anforderungssignals (AS) von innerhalb des Fahrzeugs (F) der erste und/oder der zweite drahtlose Kommunikationsweg zur Verfügung gestellt werden.

6. Verfahren gemäß einem der vorherigen Ansprüche
**dadurch gekennzeichnet, dass**
für die Übermittlung des Anforderungssignals (AS) von außerhalb des Fahrzeugs (F) der zweite drahtlose Kommunikationsweg zur Verfügung gestellt wird.

7. Verfahren gemäß einem der vorherigen Ansprüche
**dadurch gekennzeichnet, dass**
das Haltesignal (HS) visuell, haptisch, und/oder akustisch angezeigt wird, wobei das Haltesignal dem Fahrgast auf dem mobilen Endgerät (ME, ME1, ME2) angezeigt wird.

8. Verfahren gemäß einem der vorherigen Ansprüche
**dadurch charakterisiert, dass**
das Haltesignal (HS) von der fahrzeugseitigen Steuerung (FS) über eine Schnittstelle einem Verfahren zum automatisierten Fahren zur Verfügung gestellt wird.

9. Verfahren gemäß einem der vorherigen Ansprüche,
**dadurch charakterisiert, dass**
das mobile Endgerät (ME, ME1, ME2) seinen Standort ermittelt und diesen für die Verwendung durch die App zur Verfügung stellt.

10. Verfahren gemäß einem der vorherigen Ansprüche
**dadurch gekennzeichnet, dass**
die App für die Erzeugung des Anforderungssignals (AS) die Auswahl einer Haltestelle aus mehreren noch anzufahrenden Haltestellen ermöglicht.

11. Verfahren gemäß einem der vorherigen Ansprüche
**dadurch charakterisiert, dass**
in der App mindestens ein Kriterium hinterlegt ist, welches die Auswahl des Fahrzeugs, für das die Übermittlung des Anforderungssignals (AS) zugelassen wird, festlegt, wobei das mindestens eine Kriterium bevorzugt ausgewählt wird aus einer Gruppe umfassend: Vorhandensein eines passenden Tickets, Nähe zu einer der Haltestellen, Freischaltung des Fahrgasts für die Funktionalität seitens des Betreibers.

12. Fahrzeug zur Personenbeförderung
**dadurch charakterisiert, dass**
das Fahrzeug (F) einen Sender-Empfänger (SEI) und eine mit diesem signaltechnisch kommunizierende fahrzeugseitige Steuerung (FS) umfasst, welche dazu eingerichtet sind, ein Verfahren gemäß einem oder mehreren der vorherigen Ansprüche durchzuführen.

13. Computerprogrammprodukt, enthaltend Programmbefehle, die durch fahrzeugseitige Steuerungen (FS) und/oder Leitzentralen (LZ) und/oder mobile Endgeräte (ME, ME1, ME2) von Fahrgästen ausführbar sind, derart, dass das Verfahren nach einem der Ansprüche 1 - 11 ausgeführt wird.

14. Computerlesbares Speichermedium, enthaltend Daten, welche als Datensätze vom Speichermedium gespeichert werden, derart, dass die Datensätze das Computerprogrammprodukt nach dem letzten voranstehenden Anspruch ausführbar machen.
